**Europäisches Patentamt**

**European Patent Office**

**Office européen des brevets**

(19)

(11) Veröffentlichungsnummer: **0 191 021**
**B1**

# EUROPÄISCHE PATENTSCHRIFT

(45) Veröffentlichungstag der Patentschrift:
**23.11.88**

(21) Anmeldenummer: **85901954.9**

(22) Anmeldetag: **01.05.85**

(86) Internationale Anmeldenummer:
**PCT/CH 85/00070**

(87) Internationale Veröffentlichungsnummer:
**WO 86/00045 (03.01.86 Gazette 86/01)**

(51) Int. Cl.⁴: **B 29 C 39/12,** B 29 C 51/36,
B 29 C 67/20 //
B65D81/06, B29L31/60

(54) **VERFAHREN ZUR HERSTELLUNG EINES AUFNAHMEKÖRPERS FÜR ARBEITS-, GEBRAUCHSGEGENSTÄNDE UND FORMSTÜCKE.**

(30) Priorität: **15.06.84 CH 2896/84**

(43) Veröffentlichungstag der Anmeldung:
**20.08.86 Patentblatt 86/34**

(45) Bekanntmachung des Hinweises auf die Patenterteilung:
**23.11.88 Patentblatt 88/47**

(84) Benannte Vertragsstaaten:
**AT BE CH DE FR GB IT LI LU NL SE**

(56) Entgegenhaltungen:
**DE-A-3 147 033**
**GB-A-2 130 957**
**JP-A-54 010 369**

**PATENT ABSTRACTS OF JAPAN, VOL 3, No 3, (C-41)**
**29 MARCH 1979, PAGE 27**

(73) Patentinhaber: **STEINMAIER, Roland, Bahnstrasse 16, CH- 8603 Schwerzenbach (CH)**

(72) Erfinder: **STEINMAIER, Roland, Bahnstrasse 16, CH- 8603 Schwerzenbach (CH)**

(74) Vertreter: **Rebmann, John A., Rebmann- Kupfer & Co., Patentanwaltsbureau Augustiner- Glockengasse 18, CH- 8022 Zürich 1 (CH)**

**Beschreibung**

Aufnahmekörper für Arbeits- und Gebrauchsgegenstände, wie Werkzeuge, Schaustellungsobjekte etc. für die verschiedensten Zwecke besitzen Vertiefungen, in welche die aufzunehmenden Gegenstände ganz oder teilweise versenkt eingeführt werden. Die Vertiefungen sollen die Gegenstände formschlüssig umfassen, eine Halterung gewährleisten, welche das Herausfallen auch bei Erschütterungen normalerweise ausschliesst. Bekannt sind Aufnahmekörper mit Vertiefungen, die ganz oder teilweise aus nachgiebigem Werkstoff bestehen und solche bei denen die Vertiefungen mit weichem Material ausgepolstert sind. Ist der Aufnahmekörper plattenartig und nimmt eine senkrechte oder schräge Position ein und ist Erschütterungen ausgesetzt, so wird eine genaue Anpassung der Seitenwände der Vertiefungen an die eingebrachten Gegenstände unerlässlich. Die Herstelung solcher Aufnahmekörper ist jedoch sehr umständlich, erfordert Spezialwerkzeuge sowie kostspielige Produktionseinrichtung.

Gegenstand der Erfindung ist ein Verfahren zur Herstellung eines Aufnahmekörpers für Arbeits- und Gebrauchsgegenstände etc. Demselben liegt die Aufgabe zugrunde einen Aufnahmekörper herzustellen, welcher weder eine komplizierte produktionseinrichtung noch Presswerkzeuge, pressformen noch grossen Zeitaufwand benötigt. Der nach dem Verfahren hergestellte Aufnahmekörper soll ferner das Herausfallen der in die Vertiefungen eingelegten Gegenstände in allen Lagen sowie bei Erschütterungen normalerweise verhindern.

Erfindungsgemäss wird diese Aufgabe durch die Herstellung eines Aufnahmekörpers nach dem im Kennzeichen des Patentanspruches 1 definierten Verfahrensschritte gelöst. Weitere vorteilhafte Ausbildungen ergeben sich aus der folgenden Beschreibung und den abhängigen Patentansprüchen 2 bis 10 einzeln oder in Kombination.

In der Zeichnung zeigen:

Fig. 1 eine Draufsicht auf einen nach dem Verfahren hergestellten Aufnahmekörper,

Fig. 2 einen Schnitt nach der Linie II -II in Fig. 1 und

Fig. 3 einen Vertikalschnitt durch die zur Ausführung des Verfahrens dienende Einrichtung.

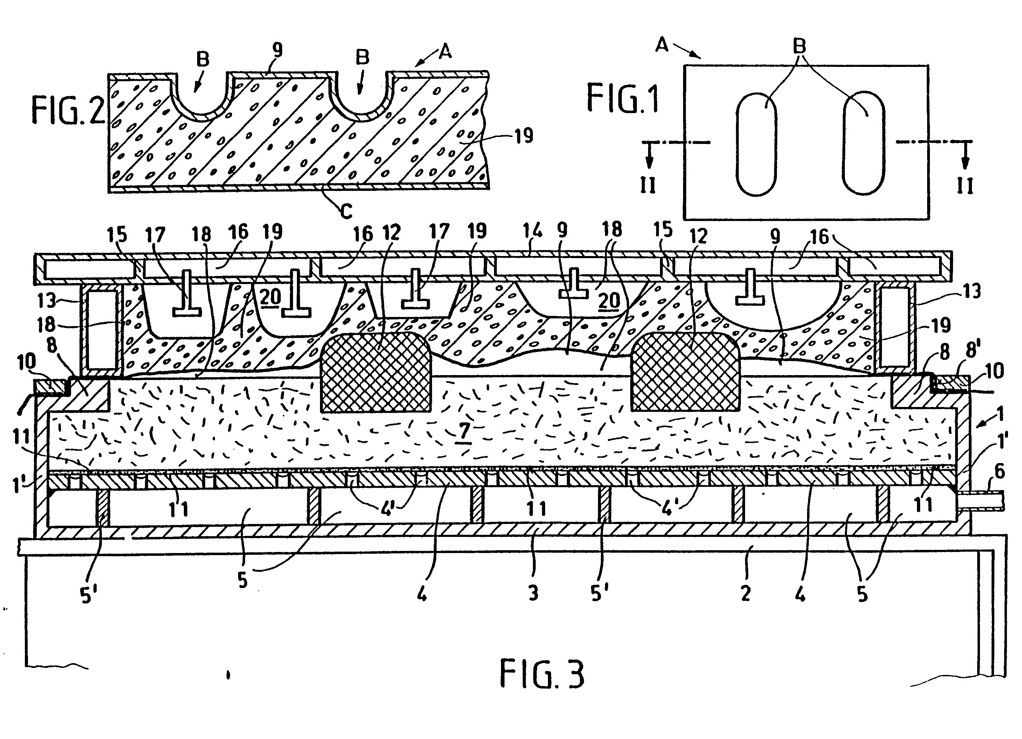

Der in Fig. 1 und 2 gezeigte, nach dem erfindungsgemässen Verfahren hergestellte Aufnahmekörper ist bretter- oder plattenartig, und wenn derselbe zum Halten von Werkzeugen dient, beträgt die Gesamtdicke ca. 3 - 5 cm, oder besitzt eine Tiefe, welche die zu haltenden Teile aufnimmt. Der Aufnahmekörper A besitzt Vertiefungen B für die aufzunehmenden Gegenstände. Derartige Aufnahmekörper sind bekannt und werden für sich allein oder als Einbauteile in Schränken, Koffern, usw.

verwendet. Die Gestaltung der Vertiefungen, die möglichst genau mit den Umrissen der aufzunehmenden Teile übereinstimmen sollen, erfordert komplizierte Werkzeuge, wie Pressformen, was die Herstellung sehr verteuert und unrentabel macht, wenn nicht eine Vielzahl herzustellen ist. Eine eingearbeitete Schicht C macht den Aufnahmekörper selbsttragend.

Bei der in Fig. 2 gezeigten, zur Herstellung eines Aufnahmekörpers dienenden Einrichtung bezeichnet 1 ein oben offenes Behältnis, das auf einem Traggestell 3 angeordnet ist. Im Abstand über dem Boden 2 des Behältnisses 1 befindet sich eine mit Durchlässen 4' versehene Zwischenwand 4. Der Boden 2, die Zwischenwand 4 und die vertikalen Seitenwände 1' des Behältnisses 1 begrenzen eine mehrfach durch Distanzhalter 5' unterteilte Vakuumkammer 5, an welche sich das Absaugrohr 6 anschliesst, das mit einer entfernten, nicht besonders dargestellten Ansaugpumpe verbunden ist. Oberhalb der Zwischenwand 4 liegt im Behältnis 1 eine Einbettmasse 7, welche wegen des guten Trenneffektes zweckmässig aus Quarzsand besteht. Über einen nach innen abgewinkelten Flansch 8 des Behältnisses 1 ist eine Folie 9 gespannt, die durch einen der Absetzung 8' des Flansches aufliegenden, metallenen Niederhalterahmen 10 arretiert ist. Die Folie 9 verläuft im Bereich des Flansches 8 und der Absetzung 8' zur sicheren Halterung in gebrochener Linie. Auf der Zwischenwand 4 befindet sich ein luftdurchlässiges, feines Stahlgewebe 11, welchem die Einbettmasse 7 aufliegt. In die Einbettmasse 7 sind die aufzunehmen bestimmten Gegenstände 12 teilweise versenkt angebracht. Normalerweise ist eine Versenkung bis zu 45 Grad der Gegenstände ausreichend. 13 ist ein rechteckiger Tragrahmen, welchem die Deckplatte 14 aufliegt.

Vor dem Einschäumen erzeugt man in der Kammer 5 durch Absaugen der in dieser befindlichen Luft über das Absaugrohrstück 6 ein Vakuum. Der Raum 18 über der Zwischenwand 4 und dem Stahlgewebe 11 wird durch den Abzug der Luft in den Vakuumzustand versetzt. Die Luft kann dabei leicht durch die Einbettmasse 7 und das Stahlgewebe 11 abziehen. Die Folie 9 wird dabei nach unten gezogen und passt sich haargenau den eingelegten Gegenständen 12 an, gleichgültig wie deren Formen sind und sich diese mehr oder weniger tief in der Einbettmasse 7 befinden.

Die Einschäumung kann manuell oder maschinell erfolgen. Die untere Seite der Schicht, wenn sie z. B. aus Schaumkunststoff besteht, legt sich innig der Folie 9 und letztere den vorstehenden Partien der in die Einbettmasse 7 eingebrachten Gegenstände 12. Die zwischen den Gegenständen 12 befindlichen Teile der Folie verlaufen dabei flach.

Nach Erhärten des in den Raum 18 eingebrachten Kunststoffes entstehen mit den Konturen der eingelegten Gegenstände getreu übereinstimmende Formationen bzw.

Vertiefungen B in der Folie und im Kunststoff 19.

17 sind in die Aussparungen 20 ragende Halterungen, welche beim Schäumen von Aussparmaterial wie Gips bei der Fertigstellung zur Anwendung kommen.

Kostspielig anzufertigende Presswerkzeuge und Formen sind zur Herstellung des Aufnahmekörpers nach dem beschriebenen Verfahren mit der dargestellten Einrichtung nicht mehr nötig. Innert relativ kurzer Zeit lassen sich neue Aufnahmekörper für dreidimensionale Gegenstände herstellen, welche diese formschlüssig aufnehmen und zugleich eine gute Halterung unter allen Umständen gewährleisten. Der Aufnahmekörper ist als Werkzeugbrett und als Bestandteil in einem Kasten, einem Koffer, einem grösseren Futteral, Behältnis oder Schutzhülle zur Aufnahme und Halterung von Gegenständen als auch komplizierter Instrumente geeignet.

Anstelle von Schaumkunststoff zum Einbringen in das Behältnis lässt sich irgend ein konventioneller kalt- und warmhärtender Werkstoff verwenden. Geeignet sind besonders Epoxydharze, welche sich durch Haftfestigkeit, hohe Zähigkeit und Elastizität auszeichnen. Eine gute Halterung von grossen und kleinen sowie leichten und schweren Gegenständen, der in den Vertiefungen B des Aufnahmekörpers A eingesetzten Gegenstände, wird bei Erschütterungen gewährleistet. Die Dicke des Aufnahmekörpers A lässt sich bei Verwendung mehr oder weniger hoher Tragrahmen 13 leicht bestimmen.

Die Folie 9 kann verhaftend sowie als Trennung zwischen den eingebrachten Kunststoffen 19 und der Einbettmasse 7 dienen.

Der nach dem beschriebenen Verfahren hergestellte, z. B. geschäumte Aufnahfmekörper ist überall da verwendbar, wo an Wänden, in Schränken Werkzeuge, Formstücke etc. sicher und leicht herausnehmbar zu halten sind. Besonders vorteilhaft ist der Einbau des hergestellten Aufnahmekörpers in Koffer, welche empfindliche Instrumente, Waffen, Fotoausrüstungen und sonstige Geräte enthalten.

## Patentansprüche

1. Verfahren zur Herstellung eines Aufnahmekörpers für Gegenstände wie Arbeits- und Gebrauchsgegenstände, dadurch gekennzeichnet, dass man in eine, in einem Behältnis (1) befindliche, luftdurchlässige Einbettmasse (7) die aufzunehmenden Gegenstände (12) teilweise versenkt einlegt, eine elastische Folie (9) darüber spannt und durch Unterdruck eine formschlüssige Anpassung bewirkt, über der Folie härtenden Werkstoff (19) in das Behältnis einführt und diesen erstarren lässt.

2. Verfahren nach Patentanspruch 1, dadurch gekennzeichnet, dass man die Gegenstände (12) in ölgebundenem, die Einbettmasse (7) bildendem Quarzsand einlegt und darüber eine aus Silikongummi bestehende Folie (9) spannt.

3. Verfahren nach den Patentansprüchen 1 und 2, dadurch gekennzeichnet, dass man unter der Folie (9) und der Einbettmasse (7) ein Vakuum erzeugt, Luft aus der Einbettmasse (7) und einem darunter angeordneten, feinen Stahlgewebe (11) absaugt und den Unterdruck erzeugt.

4. Verfahren nach den Patentansprüchen 1 bis 3, dadurch gekennzeichnet, dass man in das Behältnis (1) über der Folie (9) härtbaren Kunststoff (19) einbringt.

5. Verfahren nach Patentanspruch 1, dadurch gekennzeichnet dass man den härtbaren Werkstoff (19) einschäumt.

6. Verfahren nach Patentanspruch 1, dadurch gekennzeichnet, dass man in das Behältnis (1) über der Folie (9) Kunstharz einbringt.

7. Verfahren nach Patentanspruch 1, dadurch gekennzeichnet, dass man in das Behältnis über der Folie (9) Giessharz einbringt.

8. Verfahren nach Patentanspruch 1, dadurch gekennzeichnet, dass man die Folie (9) durch einen Rahmen (13) auf dem Behältnis (1) haltert und dieses durch eine auf den Rahmen gesetzte Platte (14) abdeckt.

9. Verfahren nach Patentanspruch 1, dadurch gekennzeichnet, dass man im härtbaren Werkstoff (19) Aussparungen (20) bildet und diese mit billigerem Material füllt.

10. Verfahren nach Patentanspruch 1, dadurch gekennzeichnet, dass man die Folie mit dem Erhärteten des in das Behältnis (1) eingeführten Werkstoffes verhaften lässt.

## Claims

1. Method of producing a body for holding objects such as working and utility objects, characterised in that the objects (12) which are to be held are placed to a certain extent in recessed fashion into air-pervious embedding composition (7) disposed in a container (1), an elastic film (9) is stretched over them and a form-locking adaptation of the film is achieved by application of a negative pressure, after which material (19) which hardens over the film is introduced into the container and allowed to set.

2. Method according to patent Claim 1, characterised in that the objects (12) are placed in oil-bonded quartz and which constitutes the embedding composition (7) and in that a film (9) consisting of silicon rubber is stretched over the top.

3. Method according to patent Claims 1 and 2, characterised in that a vacuum is generated under the film (9) and the embedding composition (7), air is extracted from the embedding composition (7) and a fine steel mesh (11) disposed underneath and the negative pressure is then generated.

4. Method according to patent Claims 1 to 3, characterised in that a hardenable synthetic plastics material (19) is introduced into the container (1) over the film (9).

5. Method according to patent Claim 1, characterised in that the hardenable material (19) is foamed into position.

6. Method according to patent Claim 1, characterised in that synthetic resin is introduced into the container (1) over the film (9)

7. Method according to patent Claim 1, characterised in that casting resin is introduced into the container over the film (9).

8. Method according to patent Claim 1, characterised in that the film is supported on the container (1) by a frame (13), the container being covered by a panel (14) placed on the frame.

9. Method according to patent Claim 1, characterised in that recesses (20) are formed in the hardenable material (19), these recesses being filled with a less expensive material.

10. Method according to patent Claim 1, characterised in that the film is allowed to adhere to that material introduced into the container (1) and which has hardened.

**Revendications**

1. Procédé pour réaliser un réceptacle destiné à des objets tels que des outils ou des objets utilitaires, procédé caractérisé en ce qu'on immerge partiellement les objets (12) à recevoir dans une masse d'immersion faite perméable à l'air, se trouvant dans un conteneur (1), on tend par-dessus une feuille élastique (9) et on réalise une adaptation par la forme en agissant par dépression, on introduit dans le réceptacle un matériau durcissable (19) par-dessus la feuille et on laisse durcir.

2. Procédé selon la revendication 1, caractérisé en ce qu'on place les objets (12) dans du sable de quartz contenant comme liant de l'huile et formant la masse d'immersion (7) et on tend par-dessus une feuille (9) en caoutchouc aux silicones.

3. Procédé selon les revendications 1 et 2, caractérisé en ce qu'on crée le vide sous la feuille (9) et la masse d'immersion (7), on aspire l'air de la masse d'immersion (7) à travers un tissu d'acier (11) à mailles fines placé en dessous et on crée la dépression.

4. Procédé selon les revendications 1 à 3, caractérisé en ce qu'on introduit de la matière synthétique durcissable (19) dans le réceptacle (1) par-dessus la feuille (9).

5. Procédé selon la revendication 1, caractérisé en ce qu'on expanse un matériau durcissable (19).

6. Procédé selon la revendication 1, caractérisé en ce qu'on introduit de la résine synthétique dans le réceptacle (1) au-dessus de la feuille (9).

7. Procédé selon la revendication 1, caractérisé en ce qu'on introduit de la résine liquide dans le réceptacle, au-dessus de la feuille (9).

8. Procédé selon la revendication 1, caractérisé en ce qu'on maintient la feuille (9) sur le réceptacle (1) par un cadre (13) et on recouvre ce réceptacle par une plaque (14) placée sur le cadre.

9. Procédé selon la revendication 1, caractérisé en ce qu'on forme des cavités (20) dans le matériau durcissable (19) et on remplit ces cavités avec un matériau moins coûteux.

10. Procédé selon la revendication 1, caractérisé en ce qu'on permet à la feuille d'accrocher au matériau introduit dans le réceptacle (1) après durcissement.

FIG.2

FIG.1

B
9
B
A

19

C

A

B

B

II

II

15 17 18 16 19    16 12 17 19    14 9 18 15 12    9 16

13

20

20

13

18

19

8

19

10

8 8'

11

11

10

1

7

1'

1'

6

1'

11

11

11

5'

5

4'

4'

11

5

5'

5

4

3

5'

2

4

5

0 191 021

FIG. 3